# EUROPEAN PATENT APPLICATION

(11) **EP 4 744 973 A1**
(43) Date of publication of application: **20.05.2026**
(21) Application number: 25211330.3
(22) Date of filing: 27.10.2025
(51) Int. Cl.: B60R 25/04, G07C 9/00

(54) **ELECTRONIC KEY SYSTEM FOR VEHICLE**

(30) Priority: 14.11.2024 JP 2024198945
(71) Applicant: Suzuki Motor Corporation, Shizuoka 432-8611 (JP)
(72) Inventor: NAKAO, Taichi, HAMAMATSU-SHI, 432-8611 (JP); SUNDA, Takashi, HAMAMATSU-SHI, 432-8611 (JP); KASUYA, Tomohiro, HAMAMATSU-SHI, 432-8611 (JP)
(74) Representative: Plasseraud IP

(57) **Abstract**

An electronic key system 1 includes a plurality of mobile terminals M each of which outputs a key operation signal corresponding with a key permission of a digital key, and a controller 101 that receives the key operation signal and turns on or off a power supply of the vehicle. The mobile terminal M enables an occupant of the vehicle to perform a vehicle operation using the mobile terminal M, which is an operation of prompting an operation of an electric component mounted on the vehicle, and obtain authorization concerning turning on or off of the power supply when the occupant performs the vehicle operation using the mobile terminal M. The electronic key system 1 prohibits, out of the plurality of mobile terminals M, the mobile terminals M other than the mobile terminal M having obtained the authorization from obtaining the authorization.

## Description

### BACKGROUND OF THE INVENTION

### Field of the Invention

The present invention relates to an electronic key system for a vehicle.

### Description of the Related Art

There is a technique of displaying a button for locking and unlocking a door of a vehicle on a screen of a smartphone assigned with a digital key and locking or unlocking the door in response to an operation of the button by an occupant.

### Citation List

### Patent Literature

Patent Literature 1: Japanese Patent No. 6001176

Assume a situation where there are a plurality of smartphones assigned with a digital key. If all of those smartphones can operate as a digital key, and an occupant other than the driver (that is, a passenger) of a vehicle can shut down the power supply with the occupant's smartphone to stop the vehicle after the driver starts the vehicle, such an operation by the passenger occurs at an unexpected timing for the driver, which arises safety concerns.

### SUMMARY OF THE INVENTION

In view of such circumstances, an object of the present invention is to provide an electronic key system for a vehicle that prevents a vehicle from being operated with a digital key at an unexpected timing for a driver and contributes to improvement of the safety.

To attain the object described above, an electronic key system for a vehicle according to one aspect the present invention includes a plurality of mobile terminals each of which outputs a key operation signal corresponding with a key permission of a digital key, and a controller that receives the key operation signal and turns on or off a power supply of the vehicle.

In this aspect, the mobile terminal is configured to enable an occupant of the vehicle to perform a vehicle operation using the mobile terminal, which is an operation of prompting an operation of an electric component mounted on the vehicle, and obtain authorization concerning turning on or off of the power supply and output the key operation signal under the authorization when the occupant performs the vehicle operation using the mobile terminal.

The electronic key system is configured to prohibit, out of the plurality of mobile terminals, the mobile terminals other than the mobile terminal having obtained the authorization from obtaining the authorization.

The electric component may be an electric component other than the power supply.

The electronic key system may be further configured such that the authorization is obtained only by a first of the plurality of mobile terminals to perform the vehicle operation before start of the vehicle.

The mobile terminal may be configured to obtain the authorization when there is no other terminal that has the authorization or when there is another terminal that has the authorization but the another terminal is located outside of a communication range with the controller.

The controller may be configured to start the vehicle in response to the power supply being turned on.

The vehicle operation may be an operation that unlocks a door of the vehicle.

The mobile terminal may be configured to obtain the authorization when the occupant performs the vehicle operation when the power supply is in an off state.

The electronic key system may be further configured such that the authorization is obtained by only one of the plurality of mobile terminals in association with the controller at one time.

The mobile terminal may be configured to release the obtained authorization when a predetermined condition is satisfied.

The operation of releasing the obtained authorization may be an operation that prompts to undo the operation of the electric component caused by the vehicle operation.

When the mobile terminal obtains the authorization, the mobile terminal may be configured to present a display that alerts the occupant to the obtainment of the authorization.

The display may be a display of an operation button on a screen of the mobile terminal.

The mobile terminal may be configured to output the key operation signal in response to an operation of the operation button by the occupant.

An electronic key system for a vehicle according to another aspect the present invention includes a plurality of mobile terminals each of which is configured to perform a plurality of key operations based on a key permission of a digital key and output a signal corresponding to a key operation, a controller that receives the signal from each of the plurality of mobile terminals and performs a control corresponding with the received key operation over an electric component provided in the vehicle.

In this aspect, the key operation includes a power supply state transition operation of turning on or off a power supply that is the electric component.

The electronic key system is configured such that, out of the plurality of mobile terminals, a first mobile terminal that is a first to perform the key operation when getting in the vehicle in a door-locked state is allowed to perform the power supply state transition operation after the key operation, while a second mobile terminal other than the first mobile terminal is prohibited from performing the power supply state transition operation after the key operation.

According to an aspect of the present invention, when an occupant performs a vehicle operation with a mobile terminal, the mobile terminal is allowed to obtain authorization and to output a key operation signal, while the other mobile terminals are prohibited from obtaining authorization. Therefore, the power supply can be prevented from being turned on and off by a key operation signal from another mobile terminal regardless of the intention of the driver or at an unexpected timing for the driver.

### BRIEF DESCRIPTION OF THE DRAWINGS

Fig. 1 is a schematic diagram showing a general configuration of an electronic key system for a vehicle according to an embodiment of the present invention;
Fig. 2 is a schematic diagram showing an internal configuration of a computing unit of the electronic key system shown in Fig. 1;
Fig. 3 is a flowchart showing a flow of a process concerning a digital key control performed by a mobile terminal;
Fig. 4 is a flowchart showing a flow of the process concerning the digital key control performed by the mobile terminal;
Fig. 5 is a flowchart showing a flow of a process concerning the digital key control performed by an onboard controller;
Fig. 6 is a flowchart showing a flow of the process concerning the digital key control performed by the onboard controller;
Fig. 7 is a schematic diagram showing radio wave reception areas (an accessible area A1 and a start area A2) of the mobile terminal;
Fig. 8 is a state transition diagram conceptually showing switching between home screens;
Fig. 9 is a schematic diagram showing home screens 1 and 2;
Fig. 10 is a schematic diagram showing a home screen 3 (before and after start of the vehicle);
Fig. 11 is a schematic diagram showing a power supply alert screen; and
Fig. 12 is a schematic diagram showing an authorization-suspended screen.

### DETAILED DESCRIPTION OF THE PREFERRED EMBODIMENT

In the following, an embodiment of the present invention will be described with reference to the drawings.

In the following description, an "occupant" refers to a person who is or will be sitting in a driver's seat (referred to also as a "driver") or a person who is or will be sitting in a seat other than the driver's seat, and the occupant who is or will be sitting in a seat other than the driver's seat is referred also to a "passenger". The seats other than the driver's seat include seats next to and behind the driver's seat, the seat next to the driver's seat may be referred to as a "passenger seat", and a seat behind the driver's seat may be referred to as a "rear seat". That is, a "passenger" may be an occupant who is or will be sitting in the passenger seat or an occupant who is or will be sitting in a rear seat.

### (General Configuration of Electronic Key System)

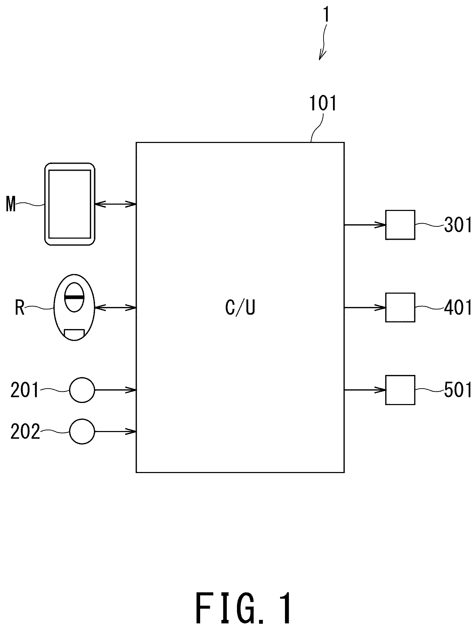

Fig. 1 is a schematic diagram showing a general configuration of an electronic key system 1 for a vehicle (referred to simply as an "electronic key system", hereinafter) according to an embodiment of the present invention. The electronic key system 1 provides a socalled key-less entry system that does not rely on any physical key that is inserted into a keyhole.

The electronic key system 1 includes a mobile terminal M, a vehicle key R, an onboard controller (referred to simply as a "controller", hereinafter) 101 and a power supply switch 201 as main components.

In addition to the components described above, the electronic key system 1 includes a brake switch 202 as an auxiliary component.

The mobile terminal M forms an input unit of the electronic key system 1 along with the vehicle key R and the power supply switch 201. The mobile terminal M can operate as a digital key and outputs a key operation signal corresponding with a key permission of the digital key.

As described in detail later, in this embodiment, the occupant can operate a button displayed on a screen of the mobile terminal M to control locking and unlocking of a door of a vehicle, turning on and off of a power supply, and start and stop of the vehicle. To this end, the mobile terminal M outputs a key operation signal corresponding to a button operation by the occupant to the controller 101.

The mobile terminal M downloads a computer program of an application (referred to as a "digital key application", hereinafter) for setting or assignment of a digital key from a remote server (not shown). The mobile terminal M can operate as the digital key once the digital key application is installed in the mobile terminal M.

Here, the term "digital key" refers to a function assigned to the mobile terminal M. In the following description, however, the mobile terminal M that has the digital key application installed therein and can operate as a digital key may also be referred to as a "digital key", for the sake of convenience.

In this embodiment, a plurality of key permissions of the digital key can be set in the mobile terminal M.

Permissions that are set in the mobile terminal M include a door locking permission concerning locking and unlocking of a door of a vehicle (which may be referred to simply as a "door", hereinafter), a power supply state transition permission concerning start and stop of a power supply unit mounted on a vehicle, that is, concerning turning on and off of a power supply, and a vehicle start permission concerning start and stop of a drive unit involved with production of a driving force for running of the vehicle (referred to simply as a "drive unit", hereinafter).

The door locking permission, the power supply state transition permission and the vehicle start permission may be referred to also as a "first key permission", a "second key permission" and a "third key permission", respectively.

In practice, when there are a plurality of mobile terminals M, different key permissions may be set in different mobile terminals M.

Specifically, the power supply state transition permission and the vehicle start permission may be set in only one or some of the plurality of mobile terminals M, while the door locking permission is set in all the plurality of mobile terminals M.

For example, of a plurality of occupants, the door locking permission is set in the mobile terminals M of the driver and all the passengers, while the power supply state transition permission and the vehicle start permission are set in only the mobile terminal(s) M of the driver or some passengers. In other words, the mobile terminal(s) M of the driver or some passengers serves as a digital key with all key permissions set therein, while the mobile terminals M of the other occupants serve as a digital key with only the door locking permission set therein.

The mobile terminal M has a screen capable of displaying an operation button concerning an operation based on the key permission. The screen of the mobile terminal M is divided into a plurality of regions, and an operation button corresponding with the key permission can be displayed in each of the plurality of regions. The screen of the mobile terminal M is a touch-sensitive screen, for example, and the mobile terminal M outputs a key operation signal in response to the occupant operating (tapping, for example) the operation button displayed in a predetermined region of the screen with the occupant's finger or the like.

The mobile terminal M may be a smartphone.

The vehicle key R is a remote key that is portable by the occupant and is provided with an operation button concerning locking and unlocking of a door. The occupant (such as the driver) with the vehicle key R can lock the door by pushing the door locking button provided on the vehicle key R and can release the lock of the door (that is, unlock the door) by pushing the door unlocking button.

The vehicle key R further has an authentication function concerning the power supply state transition or start of the vehicle.

The vehicle key R may be a smart key or a keyless entry system, rather than the remote key.

In this embodiment, the smart key is an electronic key that has no physical button used to lock and unlock a door and can release the door lock in response to an occupant with the smart key touching the door knob or pulling the knob. The keyless entry system is a system that includes both an operation button for locking and unlocking a door of a vehicle and a physical key that is inserted into a keyhole for power supply state transition or start of the vehicle.

The power supply switch 201 is provided at a position within reach of the driver sitting in the driver's seat, such as a position close to a steering column. The power supply switch 201 includes a button operable by the driver and outputs an on signal to the controller 101 when the button is pushed by the driver. In this embodiment, the power supply switch 201 is a push start button.

The brake switch 202 is provided on a brake pedal or a moving component associated therewith and is normally in the off state. The brake switch 202 is turned on and outputs an on signal to the controller 101 when the brake pedal is pressed by the driver.

The controller 101 forms a computing unit of the electronic key system 1. The controller 101 receives output signals from the mobile terminal M, the vehicle key R, the power supply switch 201 and the brake switch 202, processes the signals according to a previously stored control program, and outputs instruction signals, which are results of processing, to a power supply unit 301, a drive unit 401 and a door lock unit 501. An internal configuration of the controller 101 will be described in detail later.

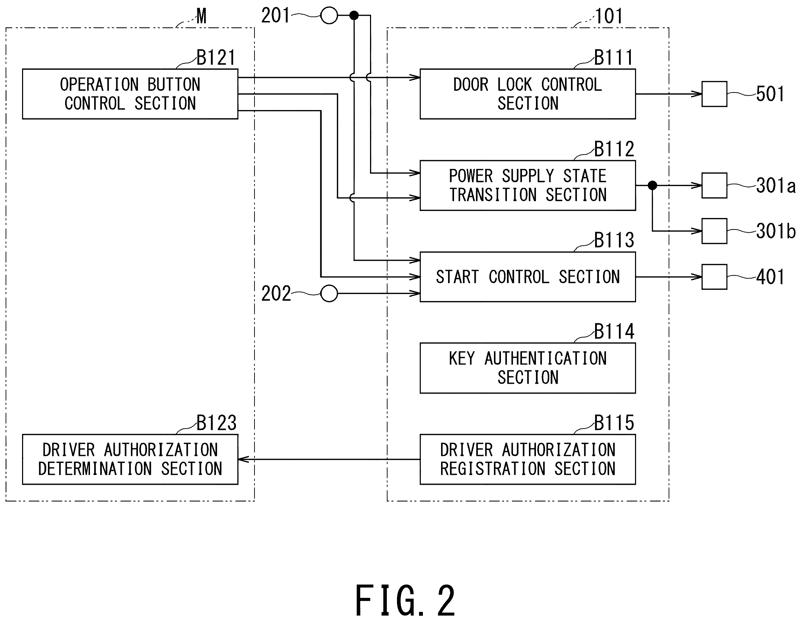

In this embodiment, as power supply units 301 of the vehicle, an accessory power supply unit 301a and a system power supply unit 301b are provided (Fig. 2). The accessory power supply unit 301a provides a power supply for car audio equipment such as a radio, a navigation system or an instrument on an instrument panel. The system power supply unit 301b is referred to also as a power-on power supply unit and provides a power supply for the drive unit 401.

The driver with the digital key (mobile terminal M) or vehicle key R can turn on the accessory power supply unit 301a by pushing the power supply switch 201 without pressing the brake pedal. In this case, the controller 101 outputs an on signal as an instruction signal to the accessory power supply unit 301a.

On the other hand, the driver with the digital key or vehicle key R can turn on both the accessory power supply unit 301a and the system power supply unit 301b and activate the drive unit 401 by pushing the power supply switch 201 while pressing the brake pedal. In this case, the controller 101 outputs an on signal as an instruction signal to each of the accessory power supply unit 301a and the system power supply unit 301b and outputs an activation signal to the drive unit 401. By turning on the system power supply unit 301b, the drive unit 401 can be activated to start the vehicle.

When the controller 101 receives an output signal that indicates to lock the door from the mobile terminal M or vehicle key R, the controller 101 further outputs a door locking signal as an instruction signal to the door lock unit 501. On the other hand, when the controller 101 receives an output signal that indicates to unlock the door, the controller 101 outputs a door lock releasing signal as an instruction signal to the door lock unit 501.

The door lock unit 501 includes a door lock actuator. The door lock unit 501 makes the door lock actuator operate in a door locking direction to lock the door when the door lock unit 501 receives the door locking signal, and makes the door lock actuator in a door unlocking direction to unlock the door when the door lock unit 501 receives the door unlocking signal.

Here, the door lock unit 501 form an "electrical component" in this embodiment.

### (Internal Configuration of Computing Unit)

In this embodiment, the computing unit of the electronic key system 1 is formed by the mobile terminal M and the controller 101.

The controller 101 is formed by a microcomputer including a central processing unit (CPU), an input/output interface and various storage devices, such as a ROM and a RAM, and is mounted on a vehicle as an electronic control unit.

The electronic key system 1 includes a door lock control section B111, a power supply state transition section B112, a start control section B113, a key authentication section B114, a driver authorization registration section B115, an operation button control section B121 and a driver authorization determination section B122, as components forming the computing unit. Functions of these components are implemented on a software basis by the mobile terminal M or controller 101 reading a previously stored control program and operating according to an instruction indicated by the control program.

In this embodiment, the door lock control section B111, the power supply state transition section B112, the start control section B113, the key authentication section B114 and the driver authorization registration section B115 are provided in the controller 101, and the operation button control section B121 and the driver authorization determination section B122 are provided in the mobile terminal M.

When the door lock control section B111 receives a key operation signal based on a door locking permission, specifically, a key operation signal that indicates to lock or unlock the door, from the mobile terminal M, the door lock control section B111 outputs a door locking signal or a door unlocking signal to the door lock unit 501.

When the door lock control section B111 receives an output signal that indicates to lock or unlock the door from the vehicle key R, the door lock control section B111 further outputs a door locking signal or a door unlocking signal as an instruction signal to the door lock unit 501.

When the power supply state transition section B112 receives a key operation signal from the mobile terminal M or an output signal from the power supply switch 201 and receives a key operation signal or output signal that indicates to turn on the power supply, the power supply state transition section B112 outputs an on signal to both, or only the accessory power supply unit 301a, of the accessory power supply unit 301a and the system power supply unit 301b.

The output of the on signal from the power supply state transition section B112 can be implemented by operating the power supply switch 201 after the digital key (mobile terminal M) is authenticated. That is, the output of the on signal from the power supply state transition section B112 can be implemented by the driver pushing the power supply switch 201 in a state where the mobile terminal M is placed on a tray (smartphone tray).

Furthermore, the power supply state transition section B112 can output the on signal in response to the power supply switch 201 being operated after the vehicle key R is authenticated, and outputs the on signal in response to the driver with the vehicle key R pressing the power supply switch 201.

The authentication of the vehicle key R or the digital key is implemented by the key authentication section B114 described later.

When the start control section B113 receives a key operation signal from the mobile terminal M or an output signal from the power supply switch 201 and receives a key operation signal or output signal that indicates to activate the drive unit 401, the start control section B113 outputs an on signal to the drive unit 401. The start control section B113 outputs the on signal when the driver operates the mobile terminal M or presses the power supply switch 201 while pressing the brake pedal.

When the key authentication section B114 receives a key operation signal or output signal that indicates to turn on the power supply from the mobile terminal M or the power supply switch 201, the key authentication section B114 grants authentication to the vehicle key R or the digital key in the procedure described below.

For example, the vehicle key R is provided with a receiver and a transmitter, and when the receiver detects a weak radio wave transmitted from the controller 101, the transmitter transmits a response radio wave back to the controller 101. The controller 101 receives the response radio wave and determines whether registration of the vehicle key R is completed. The controller 101 grants authentication of the vehicle key R on the condition that the registration is completed. Authentication of the digital key can be granted in the same procedure.

The driver authorization registration section B115 stores a setting status of driver authorization for the digital key (mobile terminal M) and provides a notification of a current setting status in response to a query about driver authorization from the mobile terminal M. The setting status of driver authorization includes the presence or absence of a digital key (mobile terminal M) that has obtained driver authorization and an identifier of the mobile terminal M, for example.

The operation button control section B121 controls the screen of the mobile terminal M assigned with a digital key and displays operation buttons corresponding with the key permission, and generates and outputs various key operation signals in accordance with the key permission based on the user's interaction with the operation buttons.

The key operation signals output by the operation button control section B121 include a first key operation signal that indicates to lock or unlock the door, a second key operation signal that indicates to turn on or off the power supply, and a third key operation signal that indicates to activate or deactivate the drive unit 401. The first key operation signal is output to the door lock control section B111, the second key operation signal is output to the power supply state transition section B112, and the third key operation signal is output to the start control section B113.

The driver authorization determination section B122 determines whether a condition previously set concerning obtaining of driver authorization (referred to as a "driver authorization obtainment condition", hereinafter) is satisfied, and driver authorization is obtained when this condition is satisfied.

The driver authorization determination section B122 further determines whether a condition previously set concerning releasing of driver authorization (referred to as a "driver authorization releasing condition", hereinafter) is satisfied after driver authorization is obtained, and the obtained driver authorization is released when this condition is satisfied.

In addition, when a digital key (mobile terminal M) has obtained driver authorization, the driver authorization determination section B122 transmits, to the driver authorization registration section B115, information indicating that driver authorization has been obtained (referred to as "driver authorization obtainment information", hereinafter) associated with the identifier of the mobile terminal M. When the obtained driver authorization is released, the driver authorization determination section B122 transmits information indicating the releasing of driver authorization (referred to as "driver authorization release information", hereinafter) associated with the identifier of the mobile terminal M to the driver authorization registration section B115.

Here, the driver authorization obtainment condition and the driver authorization releasing condition will be described.

In this embodiment, the driver authorization obtainment condition is satisfied when all the following detailed conditions a1 to a4 are satisfied on the premise that any digital key (mobile terminal M) has not obtained driver authorization:
a1) the power supply is in the off state;
a2) the door lock is released by an operation of the digital key;
a3) there is no digital key having obtained driver authorization or any digital key having obtained driver authorization is located outside of the communication range of the controller 101; and
a4) the power supply state transition permission is set in the digital key.

On the other hand, the driver authorization releasing condition is satisfied when both the following detailed conditions b1 and b2 are satisfied:
b1) the power supply is in the off state; and
b2) door locking has been implemented by the digital key or vehicle key R.

In this embodiment, as described above, driver authorization is granted to a digital key (mobile terminal M) in which the power supply state transition permission is set among the plurality of key permissions on the condition that the digital key has output a key operation signal that indicates to release the door lock. Once driver authorization is granted to the digital key, the digital key can exercise the power supply state transition permission and the vehicle start permission and can perform operations corresponding with these permissions. In this way, according to this embodiment, only one of the plurality of mobile terminals M can obtain driver authorization and can be operated as a digital key to turn on the power supply and start the vehicle.

### (Screens of Mobile Terminal and Switching between Screens)

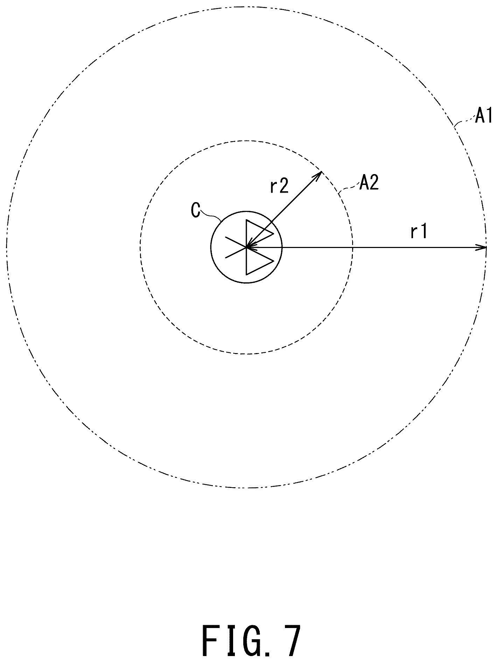

A home screen displayed on the mobile terminal M when the digital key application is activated and switching between home screens will be described with reference to Figs. 7 to 12.

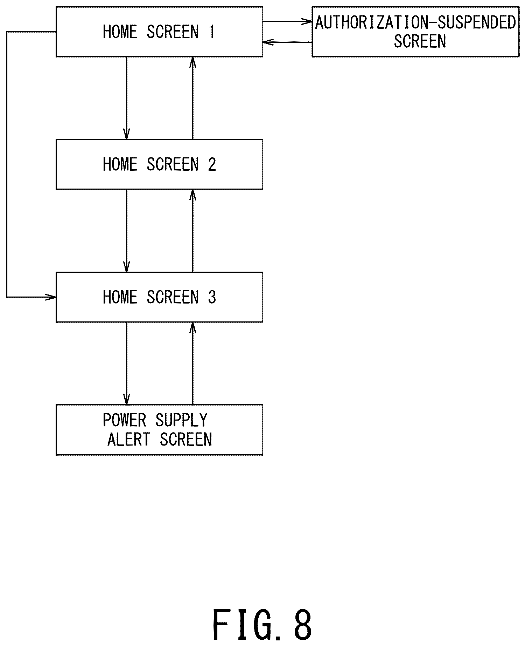

Fig. 7 is a schematic diagram showing a radio wave reception area of the mobile terminal M, and Fig. 8 is a state transition diagram conceptually showing switching between home screens.

In this embodiment, the radio wave reception area of the mobile terminal M is set with respect to the radio communication device C installed in the vehicle and includes the accessible area A1, which is set in a circular range having a relatively large radius r1 from the radio communication device C, and the start area A2, which is set in a circular range having a radius r2 smaller than the radius r1 from the radio communication device C.

The radio communication device C is disposed in the vehicle, for example, close to a wireless charger (not shown) installed beside the driver's seat. The radio communication device C and the wireless charger can be disposed close to each other in a smartphone tray provided on a console box in the vehicle.

The radio communication device C can communicate by radio with the mobile terminal M via Bluetooth Low Energy (BLE) connection, for example.

In this embodiment, the accessible area A1 is set in a range of a radius r1 of the order of several meters from the radio communication device C, and the start area A2 is set in a range of a radius r2 of the order of 1 m from the radio communication device C.

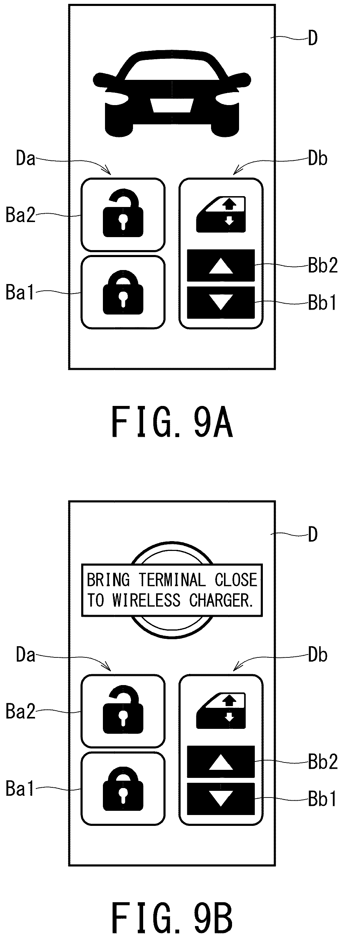

When the driver carrying the mobile terminal M comes close to the vehicle from outside the radio wave reception area and the mobile terminal M enters the accessible area A1, a home screen 1 is displayed on the mobile terminal M. Fig. 9(a) illustrates the home screen 1.

On the home screen 1, in a first region Da set on a left side in the lower half of the screen viewed from the front of the display D, operation buttons concerning an operation based on the door locking permission, specifically, operation buttons Ba1 and Ba2 concerning locking and unlocking of the door are displayed. In a second region Db set on a right side, operation buttons Bb1 and Bb2 concerning opening and closing of the window are displayed.

The driver can lock the door by operating a door locking button Ba1 displayed in a lower part of the first region Da, and can release the door lock by operating a door unlocking button Ba2 displayed in an upper part of the first region Da.

The driver further can open the window beside the seat in which the driver is sitting, that is, the window beside the driver's seat by operating a window opening button Bb1 displayed as a down arrow in the second region Db, and can close the window beside the driver's seat by operating a window closing button Bb2 displayed as an up arrow in the second region Db.

The driver performs operations of the various buttons Ba1, Ba2, Bb1 and Bb2 by tapping on the screen, for example.

When the driver operates the door unlocking button Ba2 to release the door lock, the screen displayed on the mobile terminal M changes from the home screen 1 to a home screen 2. Fig. 9(b) illustrates the home screen 2.

Here, once the door lock is released, the mobile terminal M obtains driver authorization and can exercise the power supply state transition permission and the vehicle start permission.

In the present embodiment, an operation of releasing the door lock using a digital key (mobile device M), specifically, an operation in which the door unlock button Ba2 is tapped while the door is in a locked state, corresponds to a "vehicle operation".

On the home screen 2, in the region in the lower half of the screen viewed from the front of the display D, that is, in the first and second regions Da and Db, the same operation buttons Ba1, Ba2, Bb1 and Bb2 as those on the home screen 1 are displayed. In addition, on the home screen 2, in the region in the upper half of the screen, a message to request that the mobile terminal M should be brought close to the radio communication device C is displayed. For example, the message is as follows: "BRING TERMINAL CLOSE TO WIRELESS CHARGER."

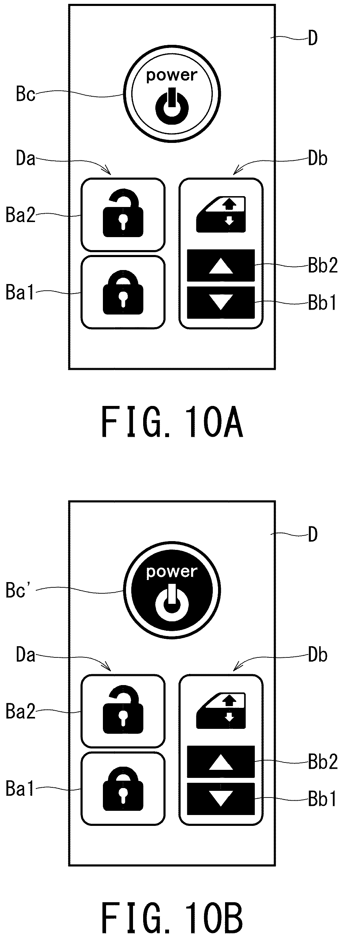

When the driver opens the door and gets in the vehicle, the mobile terminal M enters the start area A2, and the screen displayed on the mobile terminal M changes from the home screen 2 to a home screen 3. Fig. 10(a) illustrates the home screen 3.

On the home screen 3, in addition to the various operation buttons Ba1, Ba2, Bb1 and Bb2, an operation button concerning an operation based on the power supply state transition permission and the vehicle start permission, that is, an operation button Bc concerning turning on and off of the power supply and starting of the vehicle (referred to as a "power button", hereinafter) is displayed in the region in the upper half of the screen viewed from the front of the display D.

As described above, the driver can activate the accessory power supply unit 301a by operating (tapping, for example) the power button Bc without pressing the brake pedal, and can activate both the accessory power supply unit 301a and the system power supply unit 301b and activate the drive unit 401 to start the vehicle by operating the power button Bc while pressing the brake pedal.

When the driver operates the power button Bc to turn on the power supply, the home screen 3 displayed on the mobile terminal M changes from a state before power-on, which is shown in Fig. 10(a), to a state after power-on, which is shown in Fig. 10(b).

In the state after power-on, the power button Bc is more visually markedly displayed than in the state before power-on (the power button in this state is denoted as a power button Bc'). For example, the power button Bc' is displayed in a different color or emits light of a different color than the power button Bc in the state before power-on.

After that, the driver can turn off the power supply and stop the vehicle by operating the power button Bc' on the home screen 3 shown in Fig. 10(b) again. When the power supply is turned off, the screen of the display D changes to the home screen 3 shown in Fig. 10(a).

After the power supply is turned off, when the driver gets out of the vehicle and operates the door locking button Ba1, the driver authorization is released, and the screen on the display D changes to the home screen 1 shown in Fig. 9(a).

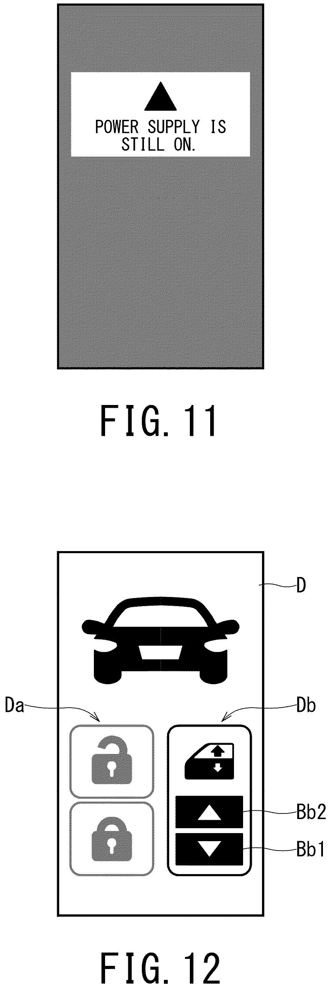

If the driver gets out of the vehicle without turning off the power supply, that is, while the power supply is in the on state, and operates the door locking button Ba1 or goes out of the start area A2, the screen displayed on the mobile terminal M changes from the home screen 3 to a power supply alert screen. Fig. 11 illustrates the power supply alert screen.

On the power supply alert screen, a message is displayed to alert the driver or other occupant with the mobile terminal M to the fact that the power supply is still in the on state. For example, the message is as follows:
"POWER SUPPLY IS STILL ON."

On the other hand, in the case where there are a plurality of mobile terminals M assigned with a digital key, in other words, in the case where there are a plurality of occupants who have a digital key (mobile terminal M), when an occupant who is getting in the vehicle with the doors locked performs a vehicle operation as an operation based on a key permission, specifically, an operation of releasing the door lock, by using the occupant's mobile terminal M, the other digital keys (mobile terminals M) are prohibited from obtaining driver authorization. In this way, the mobile terminals M other than the terminal having obtained driver authorization are prohibited from transition from the home screen 1 to other home screens, the home screens 2 and 3 in this embodiment.

The prohibition of transition to other home screens is implemented by switching the display on the mobile terminal M to an authorization-suspended screen and keeping the screen on the display D. Fig. 12 illustrates the authorization-suspended screen.

Although the authorization-suspended screen displayed is approximately the same as the home screen 1, the power button Bc is not displayed so that operations based on the power supply state transition permission and the vehicle start permission are prohibited. In other words, any mobile terminal M that is the target of the screen transition prohibition is prohibited from outputting key operation signals corresponding with the power supply state transition permission and the vehicle start permission.

In addition, in this embodiment, the door locking button Ba1 and the door unlocking button Ba2 cease being displayed in an operable manner. For example, the door locking button Ba1 and the door unlocking button Ba2 are no longer displayed on the display D so that the buttons Ba1 and Ba2 cannot be operated. Alternatively, the door locking button Ba1 and the door unlocking button Ba2 are still displayed on the display D but are made inoperable. The authorization-suspended screen shown in Fig. 12 is an example of the latter case.

The prohibition of transition to other home screens can also be implemented by graying out the whole of the display D of the mobile terminal M.

### (Digital Key Control)

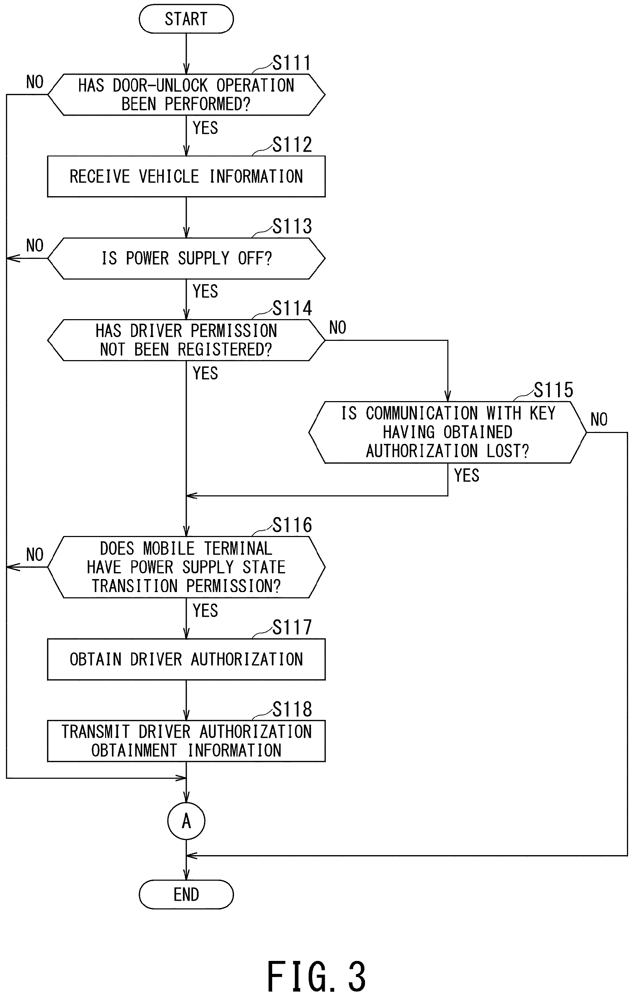

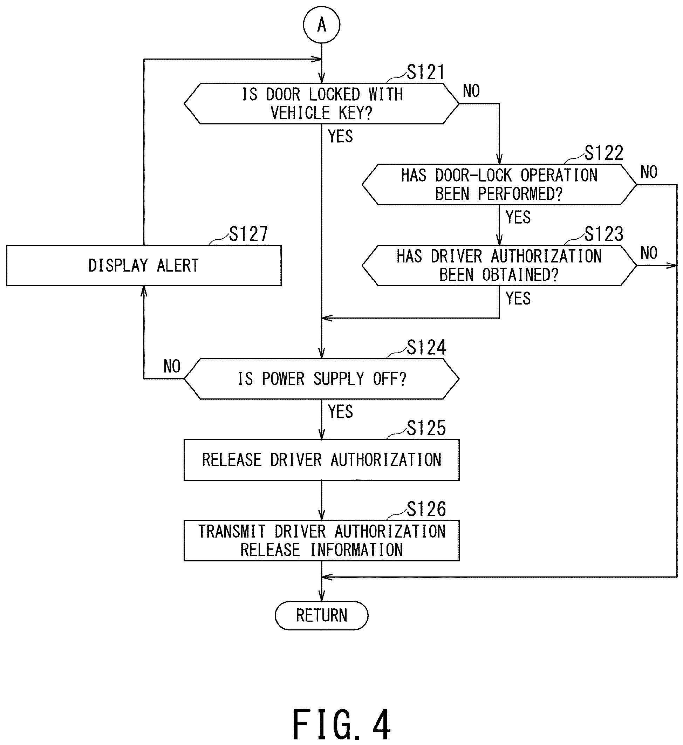

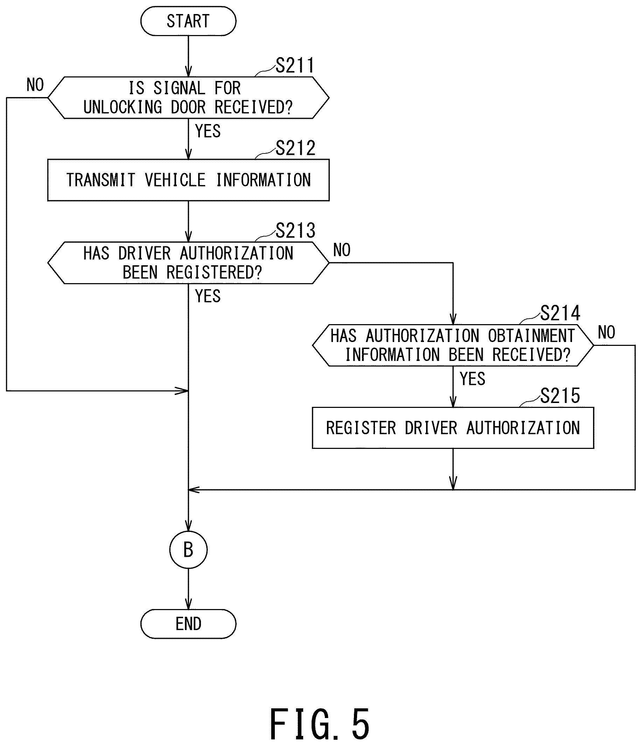

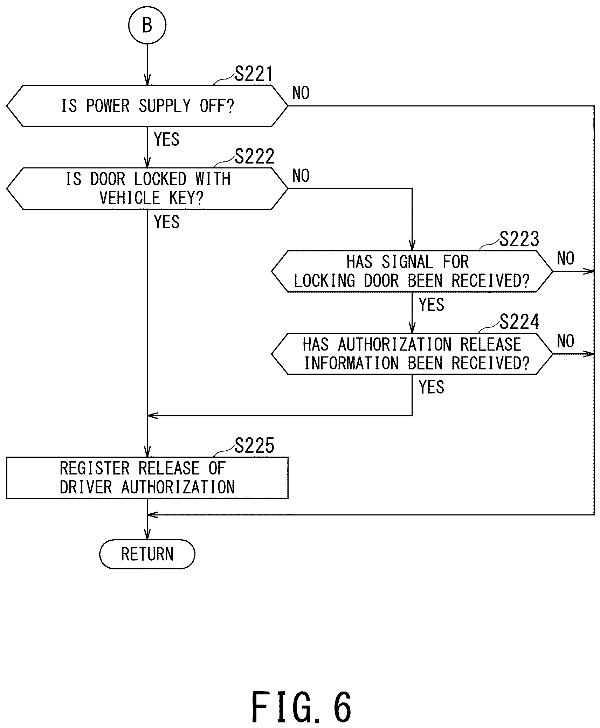

With reference to the flowcharts of Figs. 3 to 6, a digital key control will be described below. In this embodiment, the digital key control is implemented by the mobile terminal M and the controller 101. Figs. 3 and 4 show details of processes performed by the mobile terminal M, and Figs. 5 and 6 show details of processes performed by the controller 101.

### (Processes by Mobile Device)

In the flowchart shown in FIG. 3, it is determined whether the driver authorization obtainment conditions are satisfied. In this embodiment, the driver authorization obtainment conditions are deemed to be satisfied when all of the previously described detailed conditions a1 through a4 are met.

In S111, whether a key operation signal that indicates to release the door lock or, in other words, whether the door lock is released by the digital key (mobile terminal M) is determined. When a key operation signal that indicates to release the door lock is output, the process proceeds to S112. Otherwise, specifically, when the door lock is released not by the digital key but by the vehicle key R, the process proceeds to S121 in the flowchart of Fig. 4.

In S112, vehicle information is obtained from the controller 101. The vehicle information includes information about the on/off state of the power supply, information about the state of obtaining of driver authorization, and information about the communication condition of the mobile terminal M assigned with the digital key with the controller 101.

In S113, whether the power supply of the vehicle is in the off state is determined. When the power supply is in the off state, the process proceeds to S114. When the power supply is in the on state, the process proceeds to S121 in the flowchart of Fig. 4.

In S114, whether any mobile terminal M assigned with a digital key has not obtained driver authorization is determined. The presence or absence of a mobile terminal M having obtained driver authorization can be determined based on the vehicle information obtained from the controller 101, specifically, the information about the state of obtaining of driver authorization. When any mobile terminal M has not obtained driver authorization or, in other words, when there is no mobile terminal M having obtained driver authorization, the process proceeds to S116. Otherwise, that is, when there is a mobile terminal M having obtained driver authorization, the process proceeds to S115.

In S115, whether the mobile terminal M having obtained driver authorization (which may be referred to as an "authorized terminal", hereinafter) is located outside of the communication range with the controller 101 or, in other words, whether the communication between the authorized terminal M and the controller 101 is in a lost state is determined. When the authorized terminal M is located outside of the communication range with the controller 101, the process proceeds to S116. When the authorized terminal M is located in the communication range, it is determined that there is already a mobile terminal M having obtained driver authorization, and the current control ends.

In S116, whether the mobile terminal M has the power supply state transition permission is determined. When the mobile terminal M has the power supply state transition permission, the process proceeds to S117. When the mobile terminal M does not have the power supply state transition permission, the process proceeds to S121 in the flowchart of Fig. 4.

Here, the reason why only the presence or absence of the power supply state transition permission is determined is because the power supply needs to be turned on in order to start the vehicle. Therefore, in this embodiment, the power supply state transition permission is a permission for activating at least the system power supply unit 301b of the accessory power supply unit 301a and the system power supply unit 301b.

In S116, as an alternative to the determination of only the presence or absence of the power supply state transition permission, the condition for proceeding to S117 may be that the mobile terminal M has both the power supply state transition permission and the vehicle start permission. Alternatively, the presence or absence of the vehicle start permission may be determined instead of the presence or absence of the power supply state transition permission, and the process may proceed to S117 when the mobile terminal M has the vehicle start permission. In that case, for example, when the driver operates the power button Bc without pressing the brake pedal, that is, when the driver only activates the accessory power supply unit 301a, the mobile terminal M can defer obtaining driver authorization and leave an opportunity for the mobile terminal M of a passenger to obtain driver authorization.

In S117, the mobile terminal M having output the key operation signal that indicates to release the door lock obtains driver authorization.

In this embodiment, as can be seen from the above description, the mobile terminal M that obtains driver authorization is the mobile terminal M that outputs the key operation signal that indicates to release the door lock, and driver authorization is obtained only when the condition that the power supply is in the off state (S113), the condition that there is no mobile terminal M having obtained driver authorization (S114) or there is already an authorized terminal M but the terminal M is located outside of the communication range with the controller 101 (S115), and the condition that the mobile terminal M has the power supply state transition permission (S116) are all satisfied.

In S118, the mobile terminal M transmits information indicating that the mobile terminal M has obtained driver authorization (driver authorization obtainment information) to the controller 101.

In the flowchart shown in FIG. 4, it is determined whether the driver authorization release conditions are satisfied. In this embodiment, the driver authorization release conditions are deemed to be satisfied when both of the previously described detailed conditions b1 and b2 are met.

In S121, whether the door is locked by the vehicle key R is determined. When the door is locked by the vehicle key R, the process proceeds to S124. Otherwise, specifically, when the door is not locked or when the door is not locked by the vehicle key R but by the digital key, the process proceeds to S122.

In S122, whether a key operation signal that indicates to lock the door or, in other words, whether the door is locked by the digital key (mobile terminal M) is determined. When the key operation signal that indicates to lock the door is output, the process proceeds to S123. Otherwise, specifically, when the door is not locked and is in the unlocked state, the process returns to the flowchart of Fig. 3, and the current control ends.

In S123, whether driver authorization is obtained is determined. When driver authorization is obtained, the process proceeds to S124. When driver authorization is not obtained, the process returns to the flowchart of Fig. 3, and the current control ends.

In S124, whether the power supply is in the off state is determined. Whether the power supply is in the off state can be determined based on the vehicle information obtained from the controller 101, specifically, the information about the on/off state of the power supply. When the power supply is in the off state, the process proceeds to S125. When the power supply is in the on state, the process proceeds to S127.

In S125, the obtained driver authorization is released. This results in a state where no mobile terminal M has driver authorization again.

In S126, the mobile terminal M transmits information indicating that the mobile terminal M has released the obtained driver authorization (driver authorization release information) to the controller 101.

In S127, a display that alerts the occupant to the fact that the power supply is still in the on state is provided. For example, when the driver gets out of the vehicle without turning off the power supply and locks the door with the digital key (mobile terminal M) or the vehicle key R, the power supply alert screen (Fig. 11) is displayed on the mobile terminal M to prompt the driver to turn off the power supply.

In the flowcharts of Figs. 5 and 6, the obtaining status of driver authorization is registered. Fig. 5 shows details of a process concerning registration of obtaining of driver authorization (referred to as a "driver authorization obtainment registration", hereinafter), and Fig. 6 shows details of a process concerning releasing of the registration of obtaining of driver authorization (referred to as a "driver authorization release registration").

In this embodiment, the driver authorization obtainment registration and the driver authorization release registration are implemented by the controller 101. A storage area for driver authorization registration is set in the storage device of the controller 101, and the obtaining status of driver authorization is recorded in the storage area.

In the flowchart shown in Fig. 5, in S211, whether a key operation signal that indicates to release the door lock is received from the mobile terminal M is determined. When the key operation signal that indicates to release the door lock is received, the process proceeds to S212. When the key operation signal is not received, the process proceeds to S221 in the flowchart of Fig. 6.

In S212, vehicle information is transmitted to the mobile terminal M that is the transmission source of the received key operation signal.

In S213, whether driver authorization is already registered or, in other words, whether there is a digital key (mobile terminal M) that has obtained driver authorization is determined with reference to the obtaining status of driver authorization. When driver authorization is already registered, the process proceeds to S221 in the flowchart of Fig. 6. When driver authorization is not registered, the process proceeds to S214.

In S214, whether driver authorization obtainment information is received from the mobile terminal M is determined. When the driver authorization obtainment information is received, the process proceeds to S215. When the driver authorization obtainment information is not received, the process proceeds to S221 in the flowchart of Fig. 6.

In S215, the fact that the mobile terminal M has obtained driver authorization is registered. In other words, the obtaining status of driver authorization is changed to "mobile terminal M is registered".

In the flowchart of Fig. 6, in S221, whether the power supply is in the off state is determined. In this case, the power supply may be turned off not only with the power supply switch 201 but also with the digital key (mobile terminal M). When the power supply is in the off state, the process proceeds to S222. When the power supply is in the on state, the process returns to the flowchart of Fig. 5, and the current control ends. That is, the current obtaining status of driver authorization is maintained until the power supply is turned off.

In S222, whether the door is locked with the vehicle key R is determined. When the door is locked with the vehicle key R, the process proceeds to S225. When the door is not locked or the door is locked with the digital key (mobile terminal M), the process proceeds to S223.

In S223, whether a key operation signal that indicates to lock the door is received from the mobile terminal M is determined. When the key operation signal that indicates to lock the door is received, the process proceeds to S224. When the key operation signal is not received, that is, when the door is not locked and is in the unlocked state, the process returns to the flowchart of Fig. 5, and the current control ends. In this case, the display on the mobile terminal M changes to the power supply alert screen.

In S224, whether driver authorization release information is received from the mobile terminal M is determined. When driver authorization release information is received, the process proceeds to S225. When driver authorization release information is not received, the process returns to the flowchart of Fig. 5, and the current control ends.

In S225, the registration of the fact that the mobile terminal M has obtained driver authorization is deleted. In other words, the obtaining status of driver authorization is changed to "no registration".

### (Description of Operations and Effects)

The electronic key system 1 according to this embodiment has the configuration described above. In the following, effects achieved by this embodiment will be described.

First, a vehicle operation that is an operation of prompting an operation of an electric component provided in a vehicle (an operation of the door unlocking button Ba2 displayed on the mobile terminal M in this embodiment) can be implemented by an occupant of the vehicle using a mobile terminal M, and when the occupant performs this operation with the mobile terminal M, the mobile terminal M obtains authorization (that is, driver authorization) concerning turning on and off of the power supply. Based on this authorization, the mobile terminal M is permitted to output key operation signals corresponding with the power supply state transition permission and the vehicle start permission, and the other mobile terminals M are prohibited from obtaining driver authorization.

Therefore, the mobile terminals M other than the terminal M having obtained driver authorization are prevented from outputting key operation signals to the controller 101, and a situation can be prevented in which key operation signals are output from a plurality of mobile terminals M and mixed up at the controller 101.

For example, when the driver has performed a vehicle operation with the mobile terminal M of the driver, the mobile terminals M of the passengers other than the driver can be prevented from outputting a key operation signal to turn on the power supply to start the vehicle regardless of the intention of the driver or at an unexpected timing for the driver or to turn off the power supply during driving of the vehicle.

Second, when an occupant performs a vehicle operation of prompting an operation of an electric component other than the power supply with the mobile terminal M of the occupant, the mobile terminal M obtains driver authorization.

Therefore, the mobile terminals M other than the terminal M used to perform the vehicle operation can be prevented with higher reliability from obtaining driver authorization and turning on the power supply or starting the vehicle at an unexpected timing for the driver.

Third, only the first mobile terminal M to perform a vehicle operation to start the vehicle can obtain driver authorization.

Therefore, only one mobile terminal M can obtain driver authorization, and key operation signals can be prevented with higher reliability from being mixed up at the controller 101 or from being output at an unexpected timing for the driver.

Fourth, a mobile terminal M can obtain authorization when there is no other terminal M having driver authorization or when there is another terminal M having driver authorization but the terminal M is located outside of the communication range with the controller 101.

Therefore, there is substantially only one mobile terminal M that can communicate with the controller 101 and has valid driver authorization, and the controller 101 does not have to receive key operation signals from the other terminals M.

Furthermore, even if there is another terminal M having driver authorization, when the terminal M is located outside of the communication range with the controller 101, the relevant mobile terminal M is not hindered from obtaining driver authorization, so that the power supply can be turned on and off with the digital key.

Fifth, the operation of releasing the door lock (door unlocking operation) is set as a vehicle operation, and when an occupant performs the operation of releasing the door lock with the mobile terminal M of the occupant when the power supply is in the off state, the mobile terminal M obtains authorization.

The release of the door lock is an operation that is frequently performed before getting in the vehicle and is likely to be performed by the driver.

Therefore, the mobile terminal M of the driver is prompted to obtain driver authorization, and the mobile terminals M of passengers are prevented from outputting key operation signals, so that the safety can be improved.

Sixth, in the case where there are a plurality of mobile terminals M assigned with a digital key and one of the mobile terminals M has obtained driver authorization, the other terminals M are prohibited from obtaining driver authorization until a predetermined condition is satisfied and the authorization is released.

Therefore, key operation signals can be effectively prevented from being mixed up at the controller 101 or being output at an unexpected timing for the driver.

Furthermore, since a condition for releasing driver authorization once obtained by a mobile terminal M is set, driver authorization can be granted to the mobile terminal M of an appropriate occupant when the vehicle is used next time.

Since there is always only one mobile terminal M that can obtain driver authorization and output key operation signals, the obtainment of authorization has a simple regularity, and the occupants can easily recognize which mobile terminal M has driver authorization.

Seventh, when a mobile terminal M of an occupant has obtained driver authorization, the mobile terminal M provides a display to alert the occupant to the obtainment of driver authorization. In this embodiment, the screen on the display D of the mobile terminal M having obtained driver authorization changes from the home screen 1 to the home screen 3, and the screen on the display D of the other mobile terminals M is fixed at the home screen 1 and is prohibited from changing to other screens.

Therefore, any occupant can easily recognize which mobile terminal M has obtained driver authorization and whether the mobile terminal M of the occupant has driver authorization.

Eighth, an operation button involved with outputting a key operation signal is displayed as the display to alert the occupant to the obtainment of driver authorization, and the occupant is alerted on the screen on the display D of the mobile terminal M to the obtainment of driver authorization. In this embodiment, the power button Bc is displayed on the display D after the screen change (home screen 3).

Therefore, the screen on the display D of the mobile terminal M can be simplified, and the occupant can instinctively recognize that the mobile terminal M of the occupant has driver authorization.

In the above description, the mobile terminal M assigned with a digital key receives vehicle information from the controller 101 to grasp the obtaining status of driver authorization and then obtains driver authorization. The obtaining of driver authorization is not limited to this, and the controller 101 may grant driver authorization to the mobile terminal M.

For example, in a situation where there is no mobile terminal M to which driver authorization has been granted, and all doors are locked, the controller 101 transmits a signal for granting driver authorization to the first mobile terminal M to output a key operation signal that indicates to release the door lock.

Furthermore, in the above description, when an occupant releases the door lock with the mobile terminal M, that is, when an occupant performs a key operation based on the door locking permission of the digital key on the mobile terminal M and the mobile terminal M outputs a key operation signal corresponding with the key operation, the mobile terminal M receives vehicle information (specifically, the information about the obtaining status of driver authorization) from the controller 101 and determines based on the vehicle information that there is no other digital key (mobile terminal M) that has obtained driver authorization. Based on the determination that there is no other digital key that has obtained driver authorization, the mobile terminal M obtains driver authorization and transmits the driver authorization obtainment information to the controller 101.

In this embodiment, as described above, the mobile terminal M determines whether the mobile terminal M can obtain driver authorization. Alternatively, the controller 101 may determine whether the mobile terminal M can obtain driver authorization when the mobile terminal M has released the door lock. The controller 101 is an onboard ECU, for example. Examples of the onboard ECU that can be used as the controller 101 include a body control module (BCM).

The determination of whether to obtain driver authorization is not limited to the aforementioned procedure. In an alternative configuration, when the door lock is released by the mobile device M, driver authorization acquisition may be performed by transmitting driver authorization obtainment information from the mobile device M to the controller 101, in conjunction with the output of a key operation signal based on door lock authority, and upon receiving this information, the controller 101 executes driver authorization obtainment registration. In this case, a registration completion notification regarding the driver authorization is transmitted from the controller 101 to the mobile device M, and the mobile device M confirms receipt of the notification, thereby completing the obtainment of driver authorization.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

### Reference Signs List

- 1: electronic key system
- 101: onboard controller (controller)
- M: smartphone (mobile terminal)
- R: remote key (vehicle key)
- 201: power supply switch
- 202: brake switch
- 301: power supply unit
- 301a: accessory power supply unit
- 301b: system power supply unit
- 401: drive unit
- 501: door lock unit

## Claims

1. An electronic key system (1) for a vehicle, comprising:
a plurality of mobile terminals (M) each of which outputs a key operation signal corresponding with a key permission of a digital key; and
a controller (101) that receives the key operation signal and turns on or off a power supply of the vehicle,
wherein the mobile terminal (M) is configured to:
enable an occupant of the vehicle to perform a vehicle operation using the mobile terminal (M), the vehicle operation being an operation that prompts an operation of an electric component (501) mounted on the vehicle; and
obtain authorization concerning turning on or off of the power supply and output the key operation signal under the authorization when the occupant performs the vehicle operation using the mobile terminal (M), and
wherein, of the plurality of mobile terminals (M), the mobile terminals (M) other than the mobile terminal (M) having obtained the authorization are prohibited from obtaining the authorization.

2. The electronic key system (1) for a vehicle according to claim 1, wherein the electric component (501) is an electric component other than the power supply.

3. The electronic key system (1) for a vehicle according to claim 1 or 2, further configured such that the authorization is obtained only by a first of the plurality of mobile terminals (M) to perform the vehicle operation before start of the vehicle.

4. The electronic key system (1) for a vehicle according to any one of claims 1 to 3, wherein the mobile terminal (M) is configured to obtain the authorization when there is no other terminal (M) that has the authorization or when there is another terminal (M) that has the authorization but the another terminal (M) is located outside of a communication range with the controller (101).

5. The electronic key system (1) for a vehicle according to any one of claims 1 to 4, wherein the controller (101) is configured to start the vehicle in response to the power supply being turned on.

6. The electronic key system (1) for a vehicle according to any one of claims 1 to 5, wherein the vehicle operation is an operation that unlocks a door of the vehicle, and
the mobile terminal (M) is configured to obtain the authorization when the occupant performs the vehicle operation when the power supply is in an off state.

7. The electronic key system (1) for a vehicle according to any one of claims 1 to 6, further configured such that the authorization is obtained by only one of the plurality of mobile terminals (M) in association with the controller (101) at one time,
wherein the mobile terminal (M) is configured to release the obtained authorization when a predetermined condition is satisfied.

8. The electronic key system (1) for a vehicle according to claim 7, wherein the operation of releasing the obtained authorization is an operation that prompts to undo the operation of the electric component (501) caused by the vehicle operation.

9. The electronic key system (1) for a vehicle according to any one of claims 1 to 8, wherein when the mobile terminal (M) obtains the authorization, the mobile terminal (M) is configured to present a display that alerts the occupant to the obtainment of the authorization.

10. The electronic key system (1) for a vehicle according to claim 9, wherein the display is a display of an operation button (Bc) on a screen of the mobile terminal (M), and
the mobile terminal (M) is configured to output the key operation signal in response to an operation of the operation button (Bc) by the occupant.

11. An electronic key system (1) for a vehicle, comprising:
a plurality of mobile terminals (M) each of which is configured to perform a plurality of key operations based on a key permission of a digital key and output a signal corresponding to a key operation; and
a controller (101) that receives the signal from each of the plurality of mobile terminals (M) and performs a control corresponding with the received key operation over an electric component (501) provided in the vehicle,
wherein the key operation includes a power supply state transition operation of turning on or off a power supply that is the electric component (501), and
wherein of the plurality of mobile terminals (M), a first mobile terminal (M) that is a first to perform the key operation when getting in the vehicle in a door-locked state is allowed to perform the power supply state transition operation after the key operation, while a second mobile terminal (M) other than the first mobile terminal (M) is prohibited from performing the power supply state transition operation after the key operation.
